# EUROPEAN PATENT APPLICATION

(11) **EP 1 679 619 A2**
(43) Date of publication of application: **12.07.2006**
(21) Application number: 05111840.4
(22) Date of filing: 08.12.2005
(51) Int. Cl.: G06F 17/30

(54) **Methods and apparatus for evaluating aspects of a web page**

(30) Priority: 30.12.2004 US 27798
(71) Applicant: Microsoft Corporation, Redmond WA 98052 (US)
(72) Inventor: Farber, Ryan W., 98052, WA Redmond (US)
(74) Representative: Grünecker, Kinkeldey, Stockmair & Schwanhäusser Anwaltssozietät

(57) **Abstract**

An automated method is provided for evaluating the validity of links included in a web page. The web page may contain commands, such as dynamic HTML or other embedded commands, which are configured for execution upon the occurrence of an event, such as a provision of input by a user. According to one embodiment, the method includes causing the links to be generated by simulating the occurrence of the event. Upon the generation of the links, their validity may be determined, and a report may be produced which indicates whether the links are valid.

## Description

### FIELD OF INVENTION

This invention relates to computer software, and more particularly to software which may be used to validate aspects of web sites.

### BACKGROUND OF INVENTION

Many people employ the Internet to use the World Wide Web ("the web"). In the web environment, a server computer provides information requested by a client computer in the form of a web page. A web page includes, among other information, a set of instructions, or "tags," provided in a markup language format, such as Hypertext Markup Language (HTML) or Extensible Markup Language (XML). A browser program executing on the client computer receives and processes tag(s) to create a display for a user. A tag may define the presentation of a page element, such as the font of a text element. A tag may also define a hypertext link, which identifies another web resource via a Uniform Resource Locator (URL). The user may invoke a link by "clicking" on it (e.g., by using a mouse to move a cursor over the link and pressing a button on the mouse), which causes a request to be issued to a server computer to access the resource specified by the URL.

Some elements included in a web page may not be immediately apparent to a user when the page is displayed by the browser. For example, a web page may include embedded commands, such as those which are provided in Dynamic HTML (DHTML) format, which are executed to display certain page elements upon the occurrence of an event. An exemplary event which may cause embedded commands to be executed is the receipt of specific user input. For example, upon detecting that a user has moved a cursor over a specific page element (e.g., a certain link), commands may be executed which cause a new menu to appear on the display next to the page element. This type of display element is commonly referred to as a "fly-out menu." Each entry on the menu is typically a hypertext link which allows the user to access a web resource, and each may define an event which may cause another fly-out menu to appear.

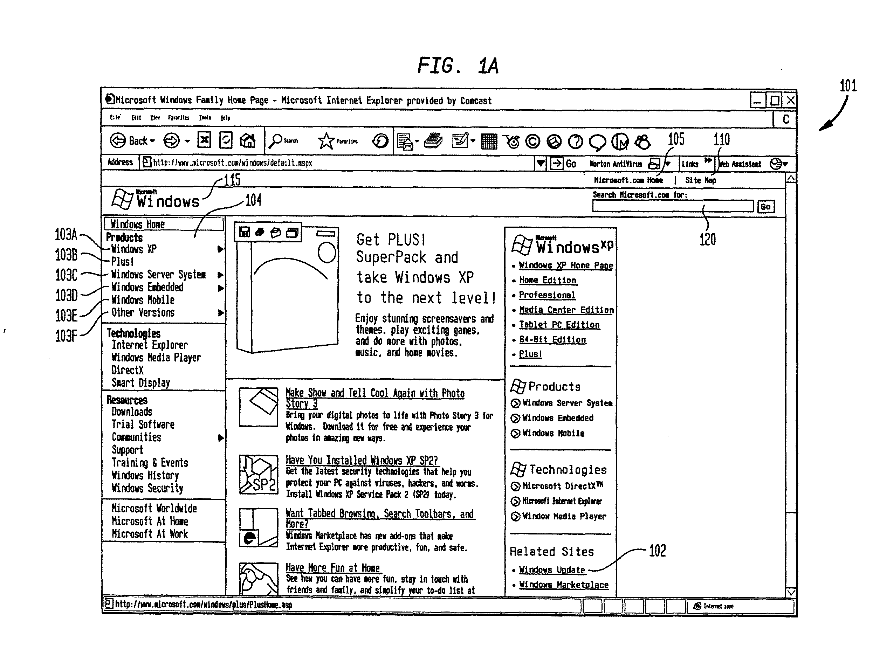

FIGS. 1A-1B illustrate a typical fly-out menu display element. FIG. 1A includes interface 101, which is a display of a web page presented by a browser program. The interface 101 shows various elements which are common to web pages, including links 105, 110, 115 and 120, and entries 103 on menu 104. In the exemplary interface shown, each of entries 103 which includes a right-hand arrow (i.e., entries 103A, 103C, 103D and 103F) is an element from which a fly-out menu may appear. That is, upon the occurrence of a specific event with respect to any of these entries (e.g., the user's directing a mouse over the element), commands may be executed which cause a fly-out menu to appear next to the element on interface 101.

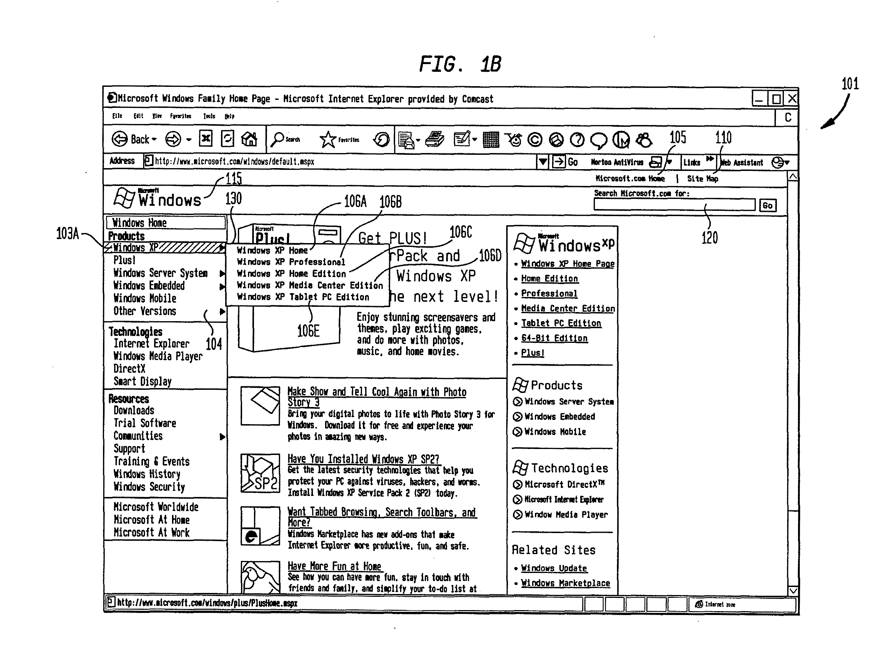

FIG. 1B illustrates that movement by a user of the cursor over entry 103A causes fly-out menu 130 to be revealed. Fly-out menu 105 contains entries 106A-106E, each of which defines a hypertext link.

In general, DHTML functionality is enabled via a Document Object Model (DOM), which is a browser component that enables the processing of page elements. Specifically, the browser processes a page by loading its tags, commands and other elements to the DOM. In the case of the Microsoft Internet Explorer browser, elements may be loaded to one or more arrays provided by the DOM, and instructions may be issued to the DOM to perform specific page element processing, such as when user input is received which may invoke embedded commands. Using the example of the fly-out menu shown in FIGS. 1A-1B, the DOM may be instructed to invoke an embedded command when the user moves the cursor over the "Windows XP" menu entry, and the execution of the embedded command may cause the fly-out menu to appear.

Some web pages, such as those which offer complex functionality, can be cumbersome to maintain. A common deficiency of a web page is its provision of invalid links, which are links that specify invalid URLs. For this reason, a number of automated tools have arisen which allow an administrator or other user to determine the validity of links on a web page. In general, these tools provide a graphical user interface (GUI) which allows the user to view the validity and disposition of links provided on a web page.

### SUMMARY OF INVENTION

According to one embodiment of the invention, an automated method is provided for evaluating at least one link included in a web page, the web page being configured for display via a browser program to a user, the web page containing commands which, when executed, generate the at least one link, the commands being configured for execution upon a provision of input by the user. The method comprises: (A) causing the at least one link to be generated by simulating the provision of the input. The method may also comprise: (B) determining the validity of the at least one link; and (C) producing a report which indicates whether the at least one link is valid.

According to another embodiment of the invention, a computer-readable medium is provided having instructions encoded thereon, which instructions, when executed, perform a method for evaluating at least one link included in a web page, the web page being configured for display via a browser program to a user, the web page containing commands which, when executed, generate the at least one link, the commands being configured for execution upon a provision of input by the user. The method comprises: (A) causing the at least one link to be generated by simulating the provision of the input. The method may also comprise (B) determining the validity of the at least one link; and (C) producing a report which indicates whether the at least one link is valid.

According to yet another embodiment, a system is provided for performing an automated method for evaluating at least one link included in a web page, the web page being configured for display via a browser program to a user, the web page containing commands which, when executed, generate the at least one link, the commands being configured for execution upon a provision of input by the user. The system comprises a generation controller to cause the at least one link to be generated by simulating the provision of the input. The system may further comprise a validity controller to determine the validity of the at least one link; and a report controller to produce a report which indicates whether the at least one link is valid.

### BRIEF DESCRIPTION OF DRAWINGS

The accompanying drawings are not intended to be drawn to scale. In the drawings, identical components illustrated in various figures are represented by like numerals. Not every component is labeled in every drawing. In the drawings:
FIGS. 1A depicts an exemplary browser interface for presenting a web page to a user;
FIG. 1B depicts a browser interface showing the web page of FIG. 1A after an element included in the web page is revealed;
FIG. 2 is a block diagram of an exemplary computer system, with which embodiments of the invention may be implemented;
FIG. 3 is a block diagram of an exemplary computer memory on which programmed instructions comprising embodiments of the invention may be stored;
FIG. 4 is a flow chart showing an exemplary process through which elements included in a web page may be identified, according to one embodiment of the invention;
FIGS. 5A-5B are diagrams illustrating an exemplary technique for identifying elements included in a web page, according to one embodiment of the invention;
FIG. 6 is a flow chart showing an exemplary method for validating links included in a web page; and
FIG. 7 depicts an exemplary browser interface displayed by a utility which determines the status of elements included in a web page, according to one embodiment of the invention.

### DETAILED DESCRIPTION

Aspects of the invention are directed to an automated method of identifying the links included in a web page. For example, one embodiment provides an automated method for identifying links which are typically revealed only upon the occurrence of an event, such as the receipt of specific user input. For example, links which are provided as entries in a fly-out menu which typically appears upon receipt of specific user input may be revealed.

According to one embodiment, the elements of a web page, including tags, links and other elements, are loaded to a Document Object Model (DOM). In one embodiment, the tags are loaded to an array provided by the DOM. A computer program entity may issue instructions to the DOM to simulate the occurrence of specific events, such as the receipt of browser input with respect to particular page elements, causing links included in the page to be revealed. For example, instructions issued to the DOM may simulate a user moving a cursor over a particular tag. Simulating an event may cause commands included within the page (e.g., dynamic HTML commands embedded in the page) to be invoked, thereby causing the additional links to be revealed. A recursive process may be executed to evaluate whether the simulation of an event with respect to any of the newly revealed links causes more links to be revealed.

Embodiments of the invention may, for example, be employed to cause links on a page to be revealed so that an automated process may evaluate their validity. For example, after the links on a page have been revealed, an automated process may issue a request to access the resource specified by each link. The process may evaluate the validity of each link based on a server's response to this request, such as a status code returned by the server for the requested resource. The results of the evaluation with respect to each link may be presented to a user via a graphical user interface (GUI). As such, one embodiment of the invention may enable the user to more effectively evaluate the validity of links included in the page, such as those which are dynamically generated upon the occurrence of an event.

It should be appreciated that the invention is not limited to uses wherein the validity of links on a page are evaluated. Indeed, embodiments of the invention may be implemented in any of numerous ways, and may have numerous applications. For example, embodiments of the invention may be employed to enable a user to produce a more complete inventory of links included in a page, without necessarily evaluating the validity of those links.

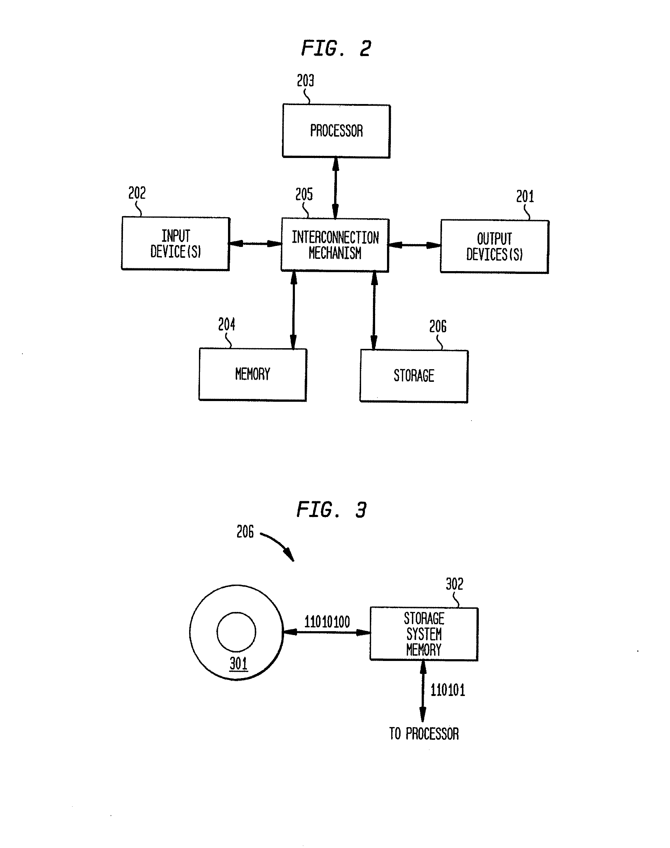

Various aspects of the invention may be implemented on one or more computer systems, such as the exemplary computer system 200 shown in FIG. 2. Computer system 200 includes input device(s) 202, output device(s) 201, processor(s) 203, memory system 204 and storage 206, all of which are coupled, directly or indirectly, via interconnection mechanism 205, which may comprise one or more buses, switches, and/or networks. The input device(s) 202 receive input from a user or machine (e.g., a human operator, or telephone receiver), and the output device(s) 201 display or transmit information to a user or machine (e.g., a liquid crystal display). The processor(s) 203 typically executes a computer program called an operating system (e.g., a Microsoft Windows (R)-family operating system or other suitable operating system) which controls the execution of other computer programs, and provides scheduling, input/output and other device control, accounting, compilation, storage assignment, data management, memory management, communication and data flow control. Collectively, the processor and operating system define the computer platform for which application programs in other computer programming languages are written.

The processor(s) 203 may also execute one or more computer programs to implement various functions. These computer programs may be written in any type of computer programming language, including a procedural programming language, object-oriented programming language, macro language, or combination thereof. These computer programs may be stored in storage system 206. Storage system 206 may hold information on a volatile or nonvolatile medium, and may be fixed or removable. Storage system 206 is shown in greater detail in FIG. 3.

Storage system 206 typically includes a computer-readable and -writeable nonvolatile recording medium 301, on which signals are stored that define a computer program or information to be used by the program. The medium may, for example, be a disk or flash memory. Typically, in operation, the processor(s) 203 causes data to be read from the nonvolatile recording medium 301 into a volatile memory 302 (e.g., a random access memory, or RAM) that allows for faster access to the information by the processor 203 than does the medium 301. This memory 302 may be located in storage system 206, as shown in FIG. 3, or in memory system 204, as shown in FIG. 2. The processor(s) 203 generally manipulates the data within the integrated circuit memory 204, 302 and then copies the data to the medium 301 after processing is completed. A variety of mechanisms are known for managing data movement between the medium 301 and the integrated circuit memory element 204, 302, and the invention is not limited thereto. The invention is also not limited to a particular memory system 204 or storage system 206.

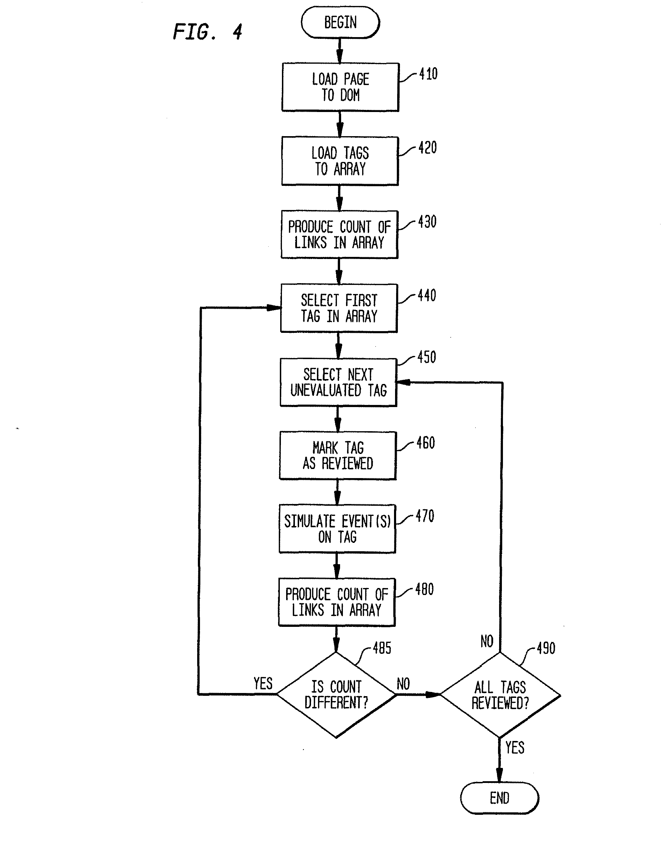

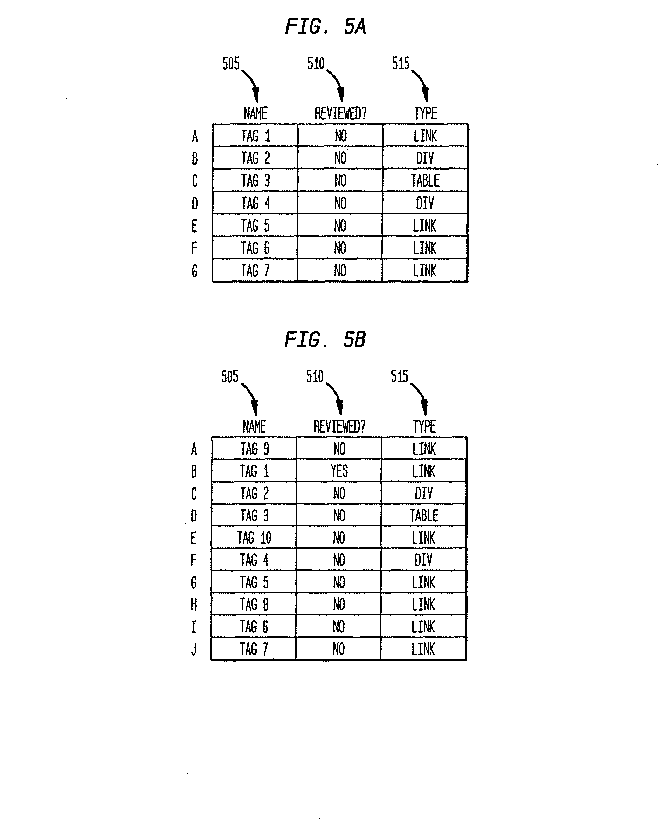

FIG. 4 depicts an exemplary technique for revealing the links included in a web page. The process of FIG. 4 may be performed using functionality provided by a Document Object Model (DOM). This functionality is described with reference to FIGS. 5A-5B. In general, the process of FIG. 4 may be performed by loading at least a portion of the tags included in a web page to an array provided by the DOM, and simulating an event with respect to each of the tags in the array to determine whether one or more new links are revealed as a result of the simulation. In the exemplary process of FIG. 4, newly revealed links are automatically added to the array. However, because new links may be placed in the array in any position, each time new links are added, the process returns to the beginning of the array to resume the simulation process. In addition, because each newly revealed link may define an event which causes even more links to be revealed, the process continues until events have been simulated with respect to all of the tags in the array. Thus, the process is recursive.

Referring to FIG. 4, upon the start of the process 400, act 410 is initiated, wherein a web page is loaded to the DOM. In one embodiment, upon loading the page to the DOM, any initial instructions included in the page are allowed to execute. For example, some pages include instructions which are executed immediately upon the page's receipt by the browser to define an introductory display sequence. This sequence may be displayed to the user for a short period before the "real" page is shown. In one embodiment, these initial instructions are allowed to execute, so that the tags and data presented to the user after the introductory sequence completes is revealed.

Upon the completion of act 410, the process proceeds to act 420, wherein tags included in the page are loaded to an array provided by the DOM. However, the invention is not limited to being practiced by loading tags to an array, as any suitable processing technique may be employed.

In one embodiment, the tags which are loaded to the array include link, table and "div" tags. However, the invention is not limited in this respect, as any suitable tag type may be processed. The tag types which are processed may be those which commonly comprise page elements that may reveal additional links upon the occurrence of an event.

An exemplary array 501 to which tags are loaded is shown in FIG. 5A. Upon being loaded, array 501 has seven rows, labeled A-G, which contain information on Tags 1-7. Each row contains information related to a specific tag. For example, upon being initially loaded, row A contains information related to Tag 1. Information on each tag is arranged in three columns. Specifically, column 405 contains a tag name, column 510 contains an indication as to whether a tag has yet been evaluated by the process, and column 515 contains a tag type.

Returning to FIG. 4, upon the completion of the act 420, the process proceeds to the act 430, wherein the number of links included in the array is determined. In one embodiment, this may be performed by generating a count of the number of rows in array 501 for which the tag type (provided in column 515) indicates that the tag is a link. However, any suitable technique for determining the number of links included in the page may be employed.

Upon the completion of the act 430, the process proceeds to act 440, wherein the first tag stored in the array (i.e., the tag which is stored nearest the beginning of the array) is selected for processing. This may be performed in any suitable fashion.

Upon the completion of act 440, the process proceeds to act 450, wherein the next unevaluated tag in the array is chosen. In one embodiment, this act includes selecting the next tag in the array for which the indication in column 510 provides that the tag has not yet been evaluated. As an example, at the start of the process, the next unevaluated tag in the array may be the first tag in the array, such that Tag 1 in Row A may be chosen.

Upon the completion of act 450, the process proceeds to act 460, wherein the selected tag is marked as having been evaluated. In one embodiment, this involves updating the indication contained in column 510 for the considered tag.

Upon the completion of act 460, the process proceeds to act 470, wherein one or more events is simulated with respect to the tag selected in act 450. In one embodiment, this involves issuing one or more instructions to the DOM to simulate one or more events that may occur. For example, the DOM may be instructed to "fire an event," or a plurality of events, with respect to the selected tag, such as one or more events defined by specific user input. Each event may represent, for example, input which may be provided by a user via a browser program. For example, the DOM may be instructed to fire an "on mouse over" event with respect to the selected tag, which would otherwise occur when a user moved the cursor over the tag. Other exemplary events which may be simulated include the "on mouse click" and "on mouse enter" events, which would otherwise occur when a user moved the cursor over the selected tag and either clicked the mouse or struck the "enter" key, respectively. It should be appreciated that any suitable type and number of events may be simulated with respect to a selected tag, as the invention is not limited in this respect.

The firing of one or more events may cause the one or more commands included in the web page to be invoked. For example, simulating an event may cause an embedded command provided in DHTML format to be executed. The execution of a command may cause one or more new links to be loaded to array 501. For example, simulating an event may cause a fly-out menu to "appear" (i.e., cause new links to be created), such that these links are automatically loaded to array 501 as new tags.

As discussed above, new tags may enter the array in any position. As illustrated by FIG. 5B, newly generated tags 8, 9 and 10 have been loaded to array 501, but instead of being loaded to rows H, I, J (i.e., the end of the array), they have been loaded to rows A, E and H, respectively. Because each of newly generated tags 8, 9 and 10 may define an event which may cause one or more new links to be generated, in one embodiment, events are simulated with respect to these new tags as well.

To accomplish this, if new tags have been loaded to array 501 the process returns to the first tag in the array to resume processing. Thus, upon the completion of the act 470, in act 480, a count of links in the array is produced. Next, in act 485, a determination is made as to whether the count produced in act 480 (i.e., the number of links contained in array 501 after the completion of act 470) is different from the quantity determined in act 430 (i.e., the count of links before the completion of act 470). If the quantity is different (as it would be upon the generation of new tags 8, 9 and 10), the process returns to act 440, wherein the first tag in the array (i.e., tag 9, in row A) is selected for processing.

If the number of tags in the array is not different, the process proceeds to act 490, wherein a determination is made as to whether all tags in the array have been evaluated. In one embodiment, this is performed by evaluating the indication contained in column 510 for each row. If the indication stored in this column in each row shows that the respective tag has been evaluated, the process completes.

If it is determined that all tags in array 501 have not been evaluated, the process returns to the act 450, wherein the next unevaluated tag is selected for processing. The acts described above are then repeated so that one or more events are simulated with respect to each tag in the array, as well as with respect to each link which is revealed as a result.

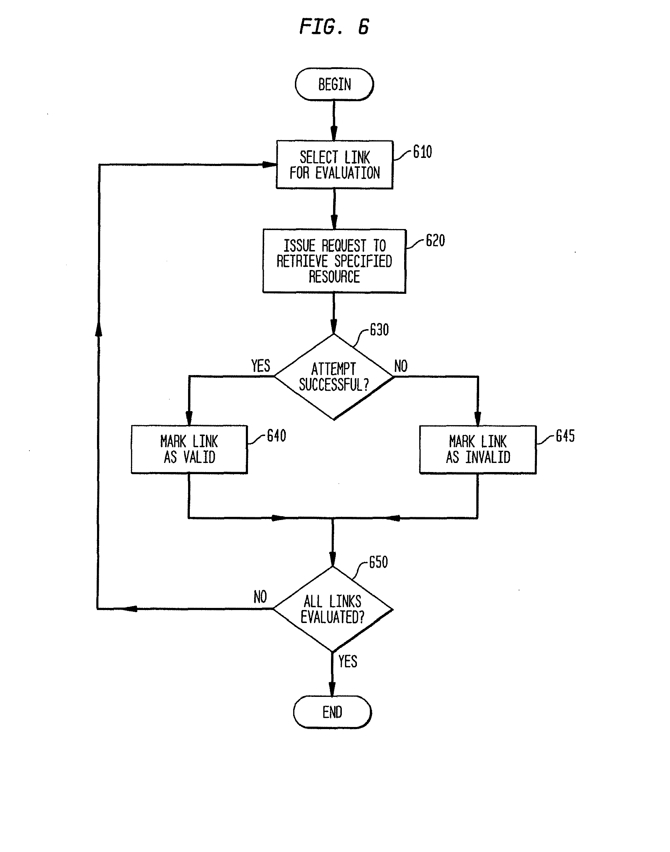

After all of the links included in a web page have been revealed, each link may be validated. In one embodiment, the validity of each link included in a web page may be determined using the process 600, shown in FIG. 6.

Upon the start of the process 600, act 610 is initiated, wherein a link is selected for evaluation. This may be performed in any suitable fashion. For example, a link may be selected from array 501 (FIGS. 5A-5B). For example, a link may be selected using the tag type indication provided in column 515. In one embodiment, the first link in the array may be selected for evaluation.

Upon the completion of act 610, the process proceeds to act 620, wherein a request is issued to retrieve the resource specified by the URL provided by the link. In one embodiment, an HTTP request is issued to retrieve the resource.

The process then proceeds to act 630, wherein a determination is made as to whether the retrieval attempt was successful. In one embodiment, this determination may be based on a status code returned by a server in response to the HTTP request issued in act 620. For example, if the server returns a status code of "200" in response to the HTTP request, then the retrieval attempt may be deemed successful, but if the server returns a status code of "404," the retrieval attempt may be deemed unsuccessful. If the retrieval attempt is deemed successful, the process proceeds to act 640, wherein the link is marked as being valid. If the retrieval attempt is deemed unsuccessful, the process proceeds to act 645, wherein the link is marked as being invalid.

Upon completion of either of acts 640 or 645, the process proceeds to act 650, wherein a determination is made as to whether the process has evaluated all of the links. If all of the links have not been evaluated, the process returns to act 610, and another link is selected for evaluation. If all of the links have been evaluated, the process 600 completes.

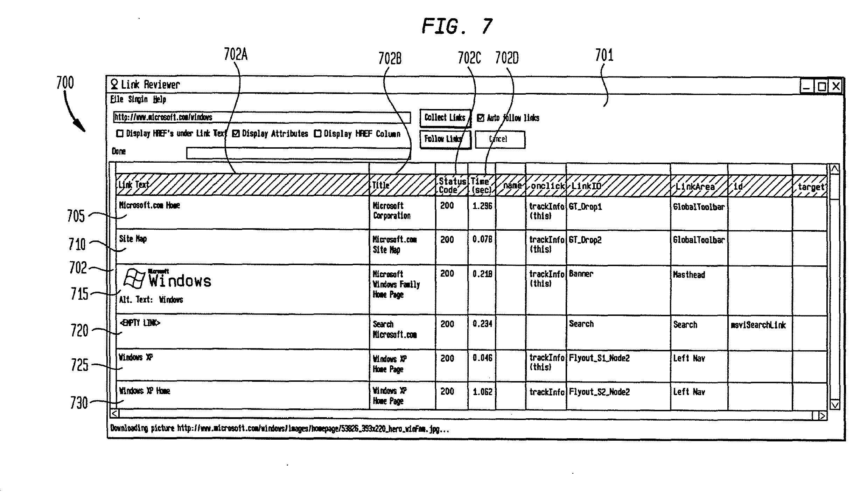

As discussed above, embodiments of the invention may be used to identify links included in a page so that the validity of those links may be evaluated. For example, an automated process may implement the process described above to identify the links included in a page, evaluate each of those links by issuing a request to access the referenced resources, and present the results of the evaluation to a user via a graphical user interface. An exemplary user interface 700 is shown in FIG. 7. Interface 700 provides an indication of the validity of the links included in the web page shown in interface 101 (FIG. 1).

Interface 700 includes portions 701 and 702. Portion 702 provides a grid display wherein specific information related to links is presented in each column. For example, column 702A includes text shown on interface 100 to represent the link, column 702B contains a title for the link, column 702C contains a status code which was returned in response to an attempt to retrieve the link, and column 702D contained the time required to obtain the status code from the server.

Information on specific links is arranged in rows. For example, information on link 105 (FIG. 1A), represented by the text "Microsoft.com home," is shown in row 705. Similarly, information on links 110, 115, 120 and 103A are shown in rows 710, 715 and 720 and 725, respectively.

As shown in row 730, the interface 700 displays information related to links which appear only upon the occurrence of an event. Specifically, row 730 displays information on link 106A, which is not shown in FIG. 1A. Rather, link 106A is shown only in FIG. 1B, and appears as an entry on fly-out menu 130, which appears upon the receipt of user input. Row 730 contains, among other information, the text representing link 106A, the link title, status code and time needed to obtain the status code. Any suitable information related to aspects of a web page, including link characteristics such as those displayed in columns 702, may be shown.

It should be appreciated that by using the interface described with reference to FIG. 7, an administrator or other user may obtain a more comprehensive inventory of links provided by a web page. As a result, the user may more effectively maintain the site, such as by determining the validity of links included in the page.

It should also be appreciated from the foregoing that aspects of embodiments of the invention may be implemented in one or more computer programs, and/or hardware, firmware, or combinations thereof. For example, the various components of an embodiment, either individually or in combination, may be implemented as a computer program product which includes a computer-readable medium on which instructions are stored for access and execution by a processor. When executed by a computer, the instructions may direct the computer to implement various aspects of the embodiment.

Having described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

## Claims

1. An automated method for evaluating at least one link included in a web page, the web page being configured for display via a browser program to a user, the web page containing commands which, when executed, generate the at least one link, the commands being configured for execution upon a provision of input by the user, the method comprising:
(A) causing the at least one link to be generated by simulating the provision of the input.

2. The method of claim 1, wherein the at least one link comprises at least one entry in a fly-out menu.

3. The method of claim 1, wherein the act (A) further comprises loading the web page to a Document Object Model (DOM) and causing the DOM to execute the commands.

4. The method of claim 3, wherein the web page comprises a plurality of tags, and wherein the act (A) further comprises:
loading the plurality of tags to an array provided by the DOM; and
simulating the provision of the input with respect to each of the tags loaded to the array.

5. The method of claim 1, wherein the act (A) further comprises:
causing a first link to be generated by simulating the provision of the input; and
causing a second link to be generated by simulating the provision of the input with respect to the first link.

6. The method of claim 1, wherein the commands are provided in Dynamic HTML (DHTML) form.

7. A computer-readable medium having instructions encoded thereon, which instructions, when executed, perform a method for evaluating at least one link included in a web page, the web page being configured for display via a browser program to a user, the web page containing commands which, when executed, generate the at least one link, the commands being configured for execution upon a provision of input by the user, the method comprising:
(A) causing the at least one link to be generated by simulating the provision of the input.

8. The computer-readable medium of claim 7, wherein the at least one link comprises at least one entry in a fly-out menu.

9. The computer-readable medium of claim 7, wherein the act (A) further comprises loading the web page to a Document Object Model (DOM) and causing the DOM to execute the commands.

10. The computer-readable medium of claim 9, wherein the web page comprises a plurality of tags, and wherein the act (A) further comprises:
loading the plurality of tags to an array provided by the DOM; and
simulating the provision of the input with respect to each of the tags loaded to the array.

11. The computer-readable medium of claim 7, wherein the act (A) further comprises:
causing a first link to be generated by simulating the provision of the input; and
causing a second link to be generated by simulating the provision of the input with respect to the first link.

12. The computer-readable medium of claim 7, wherein the commands are provided in Dynamic HTML (DHTML) form.

13. A system for performing an automated method for evaluating at least one link included in a web page, the web page being configured for display via a browser program to a user, the web page containing commands which, when executed, generate the at least one link, the commands being configured for execution upon a provision of input by the user, the system comprising:
a generation controller to cause the at least one link to be generated by simulating the provision of the input.

14. The system of claim 13, wherein the at least one link comprises at least one entry in a fly-out menu.

15. The system of claim 13, wherein the generation controller further loads the web page to a Document Object Model (DOM) and causes the DOM to execute the commands.

16. The system of claim 15, wherein the web page comprises a plurality of tags, and wherein the generation controller further:
loads the plurality of tags to an array provided by the DOM; and
simulates the provision of the input with respect to each of the tags loaded to the array.

17. The system of claim 13, wherein the generation controller further:
causes a first link to be generated by simulating the provision of the input; and
causes a second link to be generated by simulating the provision of the input with respect to the first link.
